# EUROPÄISCHE PATENTSCHRIFT

(11) **EP 0 367 887 B1**
(45) Veröffentlichungstag und Bekanntmachung des Hinweises auf die Patenterteilung: **30.03.1994**
(21) Anmeldenummer: 88810757.0
(22) Anmeldetag: 07.11.1988
(51) Int. Cl.: A01N 47/36, A01N 25/34

(54) **Herbizides Wirkstoffkonzentrat**
Herbicidal concentrate
Concentré herbicide

(30) Priorität: 04.08.1988 US 228635
(43) Veröffentlichungstag der Anmeldung: 16.05.1990
(73) Patentinhaber: CIBA-GEIGY AG, 4002 Basel (CH)
(72) Erfinder: Somlo, Josef, CH-4125 Riehen (CH)

(56) Entgegenhaltungen:
- WO-A-90/00007
- DE-A- 3 017 639
- FR-A- 2 509 575
- GB-A- 847 370
- D.A. NEUMÜLLER: "Römpps Chemie-Lexikon", Auflage 8: "Tabletten", 1988, Seiten 4111-4112, Franckh'sche Verlagshandlung, Stuttgart, DE

## Beschreibung

Die vorliegende Erfindung betrifft ein herbizides Wirkstoffkonzentrat in Form von gepressten Formkörpern, die als aktive Komponente einen herbizid wirksamen Sulfonylharnstoff enthalten und die in Wasser unter Bildung einer spritzfähigen Dispersion zerfallen.

Herbizide Mittel sind in der Regel als Konzentrate im Handel, die beim Verdünnen mit Wasser unmittelbar gebrauchsfertige Mischungen ergeben. Die gängigsten Formen solcher Konzentrate sind benetzbare Pulver (wettable powders), in Wasser dispergierbare Granulate, emulgierbare Konzentrate (emulsifiable concentrates) und wässrige Suspensionskonzentrate (flowables).

Ein benetzbares Pulver besteht üblicherweise aus Aktivsubstanz, einem oder mehreren oberflächenaktiven Mitteln und einer inerten festen Trägersubstanz, beispielsweise Tonerde oder hochdisperse Kieselsäure. In Wasser disperigierbare Granulate enthalten in der Regel neben der Aktivsubstanz ein oder mehrere Dispergiermittel, einen inerten festen Träger, wie Tonerde, Kaolin oder Diatomeenerde, und einen Binder, beispielsweise Gummi Arabicum, Dextrin oder ein Cellulosederivat. Es wurde auch bereits vorgeschlagen, den Granulaten eine in Gegenwart von Wasser Gas entwickelnde Komponente zuzusetzen, z.B. eine organische Säure und ein Alkalimetalcarbonat oder Hydrogencarbonat. Es wurde auch bereits vorgeschlagen, solche eine in Gegenwart von Wasser Gas entwickelnde Komponente enthaltende Granulate zu Tabletten zu verarbeiten. Ein emulgierbares Konzentrat stellt eine Lösung der Aktivsubstanz und eines oder mehrerer oberflächenaktiven Mittel in einem inerten Lösungsmittel, beispielsweise einem aromatischen Kohlenwasserstoff oder Mineralöl, dar. Bei wässrigen Suspensionskonzentraten ist schliesslich eine feste Aktivsubstanz in feiner Verteilung zusammen mit einem oder mehreren oberflächenaktiven Mitteln in Wasser suspendiert. Die Herstellbarkeit der vorgenannten Grundtypen von Konzentraten hängt weitgehend von den Eigenschaften der Aktivsubstanz ab.

Die handelsüblichen Konzentrate von Aktivsubstanzen müssen im wesentlichen zwei Forderungen genügen. Sie müssen während Lagerung und Transport stabil sein und sie müssen sich vor der Anwendung auf einfache Weise, beispielsweise durch Verdünnen mit Wasser, in eine zur Anwendung geeignete Form überführen lassen. Diese Forderungen werden je nach Art der Aktivsubstanz von den verschiedenen Typen von Konzentraten in unterschiedlicher Weise erfüllt. So besitzen die benetzbaren Pulver zwar in der Regel eine hinreichende Stabilität bei Transport und Lagerung, sie sind jedoch nicht einfach zu dosieren und neigen häufig zur Bildung von Staub, vor dem sich der Anwender durch geeignete Massnahmen, wie Schutzanzüge und Atemmasken schützen muss. In Wasser dispergierbare Granulate bieten in der Regel in bezug auf Stabilität während Transport und Lagerung keine Probleme. Sie neigen jedoch ähnlich wie benetzbare Pulver häufig zu Staubbildung und sind daher nicht leicht zu handhaben. Darüberhinaus ist die Herstellung von in Wasser dispergierbaren Granulaten aufwendig, da der feingemahlenen Mischung der Bestandteile vor der Granulierung eine Granulierflüssigkeit, in den meisten Fällen Wasser, zugesetzt werden muss, die nach der Granulierung durch Trocknen des Granulats wieder entfernt werden muss. Granulate, die eine in Wasser Gas entwickelnde Komponente enthalten, besitzen die gleichen Nachteile. Aus den eine in Wasser Gas entwickelnde Komponente enthaltenden Granulaten wurden bisher lediglich Tabletten mit einem Gewicht von etwa 5 g hergestellt. Diese Tabletten sind im Hinblick auf ihre beschränkte Grösse zur Verwendung in der Landwirtschaft unvorteilhaft. Sie wurden daher hauptsächlich zur Bekämpfung von Unkräutern und Schädlingen in der Umgebung von Häusern und in Gärten verwendet. Die emulgierbaren Konzentrate bieten hinsichtlich Stabilität kaum Probleme und sind auch leicht zu dosieren. Nachteilig ist jedoch der Gehalt an organischem Lösungsmittel, denn dieses ist einerseits teuer und beeinflusst andererseits die Toxizität der Konzentrate und der daraus hergestellten Emulsionen bei Hautkontakt ungünstig. Ausserdem sind die emulgierbaren Konzentrate durch ihren Gehalt an organischem Lösungsmittel brennbar, was ein gewisses Sicherheitsrisiko darstellt. Die wässrigen Suspensionskonzentrate sind als Flüssigkeiten leicht handhabbar und gut zu dosieren. Sie sind frei von organischen Lösungsmitteln und den dadurch verursachten Nachteilen. Ihre Stabilität bei Lagerung und Transport ist jedoch nur für solche Aktivsubstanzen befriedigend, die neben einem hinreichend hohen Schmelzpunkt (>70°C) und einer Löslichkeit in Wasser von ≦ 200 ppm eine ausreichende Stabilität gegen Hydrolyse besitzen. Bei Wirksubstanzen mit zu hoher Löslichkeit in Wasser wird die Stabilität der Suspension durch Rekristallisationsvorgänge und die damit verbundene Vergrösserung der suspendierten Partikel beeinträchtigt. Bei hydrolyseempfindlichen Aktivsubstanzen kann es, insbesondere bei längerer Lagerung, zu merklichen Verlusten an Aktivsubstanz kommen.

Es ist daher die Aufgabe der vorliegenden Erfindung, eine geeignete Form eines Wirkstoffkonzentrats für herbizid wirksame Sulfonylharnstoffe vorzusehen, das von den vorgenannten Nachteilen frei ist und das nach Zugabe von Wasser zur Bildung einer von organischen Lösungsmittel freien sprühfähigen Dispersion befähigt ist.

Diese Aufgabe wird erfindungsgemäss durch Bereitstellung eines herbiziden Wirkstoffkonzentrats in Form von gepressten Formkörpern gelöst, die in Wasser unter Bildung einer spritzfähigen Dispersion zerfallen. Das erfindungsgemässe Wirkstoffkonzentrat ist gekennzeichnet durch einen Gehalt von
5-75 Gew.% Sulfonylharnstoff
1-10 Gew.% Dispergiermittel
5-25 Gew.% Sprengmittel bestehend aus einer wasserlöslichen sauren Substanz und einem Carbonat oder Hydrogencarbonat
1-35 Gew.% Gleit- und Fliessreguliermittel
ad 100 Gew.% feuchte Lactose mit einem Wassergehalt von 8-12 Gew.% und gegebenenfalls Füllstoff und Bindemittel.

Geeignete Sulfonylharnstoffe sind beispielsweise in den publizierten europäischen Patentanmeldungen EP-A-7687, EP-A-44 808, EP-A-44 807, EP-A-84 020, EP-A-144 283, EP-A-147 365 und EP-A-158 600, sowie in den U.S.-Patentschriften 4,479,821, 4,599,412, 4,169,719 und 4,127,405 beschrieben. Besonders bevorzugte Sulfonylharnstoffe entsprechen der Formel 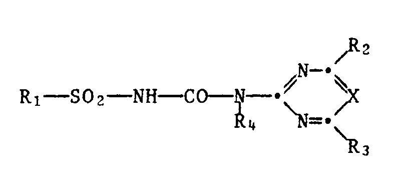
in welcher
R₁ 2-Chlorphenyl, 2-Methoxycarbonylphenyl, 2-Aethoxycarbonylphenyl, 2-(2-Methoxyäthoxy)-phenyl, 2-(2-Chloräthoxy)-phenyl, 2-Propargyloxyphenyl, 2-Methoxycarbonylthien-3-yl, 4-Aethoxycarbonyl-1-methylpyrazol-5-yl oder 2-Methoxycarbonylbenzyl,
R₂ Methyl, Methoxy, Difluormethoxy oder Cyclopropyl,
R₃ Methyl, Methoxy, Aethoxy, Difluormethoxy oder Chlor,
R₄ Wasserstoff oder Methyl und
X ein Stickstoffatom oder eine Methingruppe bedeutet.

Als speziell bevorzugte Sulfonylharnstoffe seien genannt:
N-(2-Chlorphenylsulfonyl)-N′-(4-methoxy-6-methyl-1,3,5-triazin-2-yl)-harnstoff;
N-(2-Methoxycarbonylphenylsulfonyl)-N′-(4,6-bis-difluormethoxy-1,3,5-triazin-2-yl)-harnstoff;
N-(2-Methoxycarbonylphenylsulfonyl)-N′-(4,6-dimethylpyrimid-2-yl)-harnstoff;
N-[2-(2-Methoxyäthoxy)-phenylsulfonyl]-N′-(4,6-bis-methoxy-1,3,5-triazin-2-yl)-harnstoff;
N-[2-(2-Chloräthoxy)-phenylsulfonyl]-N′-(4-methoxy-6-methyl-1,3,5-triazin-2-yl)-harnstoff;
N-(2-Propargyloxyphenylsulfonyl)-N′-(4-äthoxy-6-methyl-1,3,5-triazin-2-yl)-harnstoff;
N-(2-Methoxycarbonylphenylsulfonyl)-N′-(4-äthoxy-6-cyclopropylpyrimidin-2-yl)-harnstoff;
N-(2-Methoxycarbonylthien-3-ylsulfonyl)-N′-(4-methoxy-6-methyl-1,3,5-triazin-2-yl)-harnstoff;
N-(2-Methoxycarbonylbenzylsulfonyl)-N′-(4,6-bis-methoxypyrimidin-2-yl)-harnstoff,
N-(2-Aethoxycarbonylphenylsulfonyl)-N′-(4-chlor-6-methoxypyrimidin-2-yl)-harnstoff,
N-(2-Methoxycarbonylphenylsulfonyl)-N'-methyl-N'-(4-methoxy-6methyl-1,3,5-triazin-2-yl)-harnstoff,
N-(2-Methoxycarbonylphenylsulfonyl)-N'(4,6-bis-difluormethoxypyrimidin-2-yl)-harnstoff und
N-(2-Methoxycarbonylphenylsulfonyl)-N'-(4-methoxy-6-methyl-1,3,5-triazin-2-yl)-harnstoff.

Der Gehalt an Wirksubstanz beträgt vorzugsweise 40-50 Gew.%.

Die Form der erfindungsgemässen Formkörper kann verschieden sein. Geeignete Formen sind beispielsweise Zylinder, Würfel, Stäbchen, Ei, Kugel, Scheibe oder Linse. Vorzugsweise werden die erfindungsgemässen Formkörper als Scheibe hergestellt. Die Grösse der erfindungsgemässen Formkörper kann in weiten Grenzen variiert werden. Scheibenförmige Formkörper haben in der Regel einen Durchmesser von 3-80 mm.

Gemäss einer bevorzugten Ausführungsform der vorliegenden Erfindung werden Brausetabletten mit einem hohen Gehalt an herbizid wirksamem Sulfonylharnstoff vorgeschlagen. Eine besonders bevorzugte Ausführungsform der vorliegenden Erfindung betrifft grosse Brausetabletten mit einem hohen Gehalt an herbizid wirksamem Sulfonylharnstoff. Brausetabletten, die diese besonders bevorzugten Ausführungsform entsprechen, enthalten 40-50 Gew.% eines herbizid wirksamen Sulfonylharnstoffs und haben einen Durchmesser von 60-80 mm und ein Gewicht von 40-60 g. Solche erfindungsgemäss bevorzugten Brausetabletten enthalten
40-50 Gew.% eines herbizid wirksamen Sulfonylharnstoffs,
1,5-2,5 Gew.% eines Dispergiermittels,
8-12 Gew.% einer festen wasserlöslichen sauren Substanz,
10-15 Gew.% eines Alkalimetall- oder Erdalkalimetallcarbonats oder -Hydrogencarbonats,
1,5-3 Gew.% eines Gleit- und Fliessreguliermittels,
0,5-3 Gew.% eines Binders,
2,5-5 Gew.% Wasser und
ad 100 Gew.% Lactose.

Tabletten mit einem niedrigen Gehalt an Aktivsubstanz, beispielsweise 5-30 Gew.%, können ohne Schwierigkeiten durch sorgfältiges Mischen der einzelnen Komponenten in einem Pulvermischer, Mahlen der Mischung und weitere Verarbeitung in üblichen Tablettiermaschinen hergestellt werden. Die erfindungsgemäss bevorzugten Brausetabletten mit einem Gehalt von 40-50 Gew.% an herbizid wirksamem Sulfonylharnstoff können jedoch nicht in dieser Weise hergestellt werden.

Im Zusammenhang mit der Herstellung von Brausetabletten mit einem hohen Gehalt an herbizid wirksamem Sulfonylharnstoff ist das Folgende zu beachten. Einerseits müssen die einzelnen Bestandteile der zu tablettierenden Mischung, insbesondere die in Wasser unlöslichen Materialien, so fein als möglich gemahlen werden, um nach dem Zerfall der Tablette die Bildung einer stabilen und homogenen Suspension in Wasser zu gewährleisten und um das Verstopfen der Sprühdüsen bei der Anwendung zu vermeiden. Andererseits nehmen die bei der Herstellung von Tabletten von einer feingemahlenen Mischung auftretenden Schwierigkeiten, wie z.B. schlechte Fliesseigenschaften der Mischung, Deckebildung, Zerbrechen und Schichtenbildung der Tabletten, mit steigendem Gehalt an Aktivsubstanz zu, da in Folge des hohen Gehalts an Aktivsubstanz der Gehalt an Hilfsmitteln, welche die Fliesseigenschaften der Mischung verbessern und durch welche Probleme während der Tablettierung vermieden werden, abnimmt.

Gemäss vorliegender Erfindung wurde gefunden, dass die vorgenannten Schwierigkeiten dadurch überwunden werden können, dass man eine feuchte Lactose mit einem Wassergehalt von 8-12 Gew.%, vorzugsweise 9-10 Gew.%, verwendet und zur Vermeidung der vorzeitigen Reaktion des Wassers mit der gasbildenden Komponente bei der Zumischung der übrigen Komponenten eine bestimmte Reihenfolge beachtet.

Das erfindungsgemässe Verfahren zur Herstellung von Brausetabletten mit einem hohen Gehalt an einem herbizid wirksamen Sulfonylharnstoff wird in der Weise durchgeführt, dass man zunächst den Wassergehalt der Lactose auf 8-12 Gew.% einstellt, die feuchte Lactose siebt, anschliessend den herbizid wirksamen Sulfonylharnstoff zumischt und die erhaltene Mischung homogenisiert, der homogenisierten Mischung das Dispergiermittel, die feste wasserlösliche saure Substanz, das Carbonat und den Binder zumischt und die Mischung erneut homogenisiert, dann das Gleit- und Fliessreguliermittel zugibt und die erhaltene Mischung tablettiert.

Die im Handel erhältliche Lactose enthält in der Regel 3-5 Gew.% Wasser. Dieser Wassergehalt ist jedoch ungenügend um brauchbare Resultate zu erzielen. Deshalb muss der Wassergehalt der Lactose auf 8-12 Gew.% erhöht werden, was einem Wassergehalt der fertigen Tabletten von 2,5-5 Gew.% entspricht. Die zu tablettierende Mischung kann in üblichen Mischern, z.B. in Trommelmischern, hergestellt werden.

Die zur Herstellung der zu tablettierenden Mischung benötigten Materialien werden vor dem Vermischen auf eine geeignete Teilchengrösse gemahlen. Es ist wesentlich, dass die Teilchengrösse der in Wasser unlöslichen Bestandteile, wie des herbizid wirksamen Sulfonylharnstoffs und des Gleit- und Fliessreguliermittels, 15 µm nicht überschreitet. Vorzugweise liegt die Teilchengrösse dieser Materialien unter 15 µm. Die Maschenweite des Siebs zum Sieben der befeuchteten Lactose ist vorteilhaft etwa 1-3 mm. Bei der Herstellung der Tabletten wird in der Regel ein Druck von 200-250 kg/cm² angewandt. Auf diese werden Tabletten mit einer Dichte von 1,1-1,2 g/cm³ erhalten.

Durch Verwendung einer wie oben beschrieben hergestellten Mischung können Brausetabletten mit einem Gehalt von 40-50 Gew.% an herbizid wirksamem Sulfonylharnstoff ohne Schwierigkeiten hergestellt werden. Die Mischung zeigt ausgezeichnete Fliesseigenschaften und bei der Verarbeitung zu Tabletten tritt keine Deckebildung und kein Zerbrechen oder Schichtenbildung der Tabletten auf. Die Mischung eignet sich insbesondere zur Herstellung von grossen Tabletten mit einem Durchmesser von 60-80 mm und einem Gewicht von 40-60 g die, wie oben erwähnt, eine bevorzugte Ausführungsform der vorliegenden Erfindung darstellen. Die Tabletten zeigen gute mechanische Festigkeit und zerfallen in Wasser trotz ihrer hohen Dichte und ihre Grösse innerhalb von 5 Minuten unter Bildung einer homogenen spritzfähigen Dispersion. Ein besonderer Vorteil derartig grosser Brausetabletten mit hohem Wirkstoffgehalt besteht darin, dass sie eine besonders einfache Dosierung des Wirkstoffes ermöglichen, da bereits eine einzige Tablette die pro Hektar zu applizierende Menge an Wirkstoff enthalten kann.

Als Dispergiermittel, die die gute Benetzbarkeit der erfindungsgemässen Formkörper und die Dispergierung der nach ihrer Zersetzung in Wasser entstandenen Partikel gewährleisten, können anionische und/oder nichtionische Tenside verwendet werden. Als anionische Tenside kommen vor allem Salze von Sulfonsäuren, sowie von Halbestern der Schwefelsäure und der schwefligen Säure in Betracht, wobei unter Salzen die Natrium-, Kalium-, Calcium-, Aluminium- und Ammoniumsalze vorzugsweise die Natriumsalze, zu verstehen sind. Geeignet sind vor allem die Salze der Benzol-und Naphthalinsulfonsäure und deren im aromatischen Rest ein- oder mehrfach alkylierten Produkte, ferner die Salze von Kondensationsprodukten von Naphthalinsulfonsäure und Formaldehyd oder von Kondensationsprodukten von Naphthalinsulfonsäure, Phenolsulfonsäure und Formaldehyd, Ligninsulfonsäure, sowie Salze von Alkylpolyglykoläthersulfaten der Formel 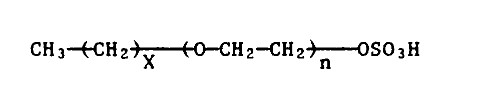
in welcher
X 7-21, vorzugsweise 11-17 und
n 2-25, vorzugsweise 18-22 bedeutet, und ferner Salze von Halbestern der Schwefelsäure mit C₁₀-C₁₈-Alkanolen.

Als einzelne Vertreter solcher anionischen Tenside seien Natrium-Ligninsulfonat, das Natriumsalz des Kondensationsproduktes von Naphthalinsulfonsäure und Formaldehyd (Tamol® SN), das Natriumsalz des Kondensationsproduktes von Naphthalinsulfonsäure, Phenolsulfonsäure und Formaldehyd, Natrium-Benzolsulfonat, Natrium-Dibutylnaphthalinsulfonat, Natrium-Dodecylbenzolsulfonat, Natrium-Cetylalkoholpolyglykoläthersulfat mit 2-20 Aethylenglykoleinheiten, Natrium-Laurylsulfat und Oelsäuremethyltaurid-Natrium.

Als nichtionische Tenside kommen vor allem Polyglykoläther von C₈-C₂₂-Alkanolen der Formel 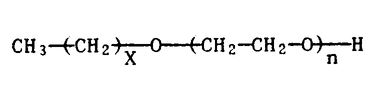
in welcher
X 7-21, vorzugsweise 9-17 und
n 2-30, vorzugsweise 2-5 und 18-23 bedeutet,
Fettsäurepolyglykolester der Formel 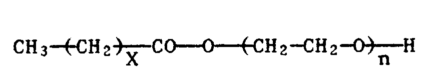
in welcher
x 6-20, vorzugsweise 8-16 und
n 5-100, vorzugsweise 8-30 bedeutet,
Sorbitan-Fettsäureester der Formel 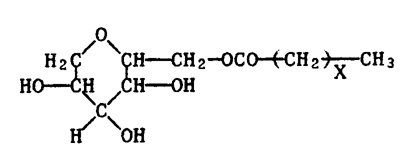
in welcher
X 6-30, vorzugsweise 14-16 bedeutet und
Polypropylenglykol-polyäthylenglykol-Copolymere mit einem Molekulargewicht von 1500-10′000 in Betracht.

Als einzelne Vertreter solcher nichtionischen Dispergiermittel seien Oleylalkoholpolyglykoläther mit 20 Aethylenglykoleinheiten, Kokosfettalkoholpolyglykoläther mit 20 Aethylenglykoleinheiten, Laurylalkoholpolyglykoläther mit 23 Aethylenglykoleinheiten, Cetylalkoholpolyglykoläther mit 2 Aethylenglykoleinheiten und Sorbitanstearinsäureester, Stearylalkkoholpolyglykoläther mit 2 Aethylenglykoleinheiten und Sorbitanstearinssäureester genannt.

Besonders bevorzugte Tenside sind Natrium-Ligninsulfonat, Natrium-Laurylsulfat und Oelsäuremethyltaurid-Natrium.

Der Gehalt der erfindungsgemässen Konzentrate an Dispergiermittel beträgt vorzugsweise 2-6 Gewichtsprozent.

Als Sprengmittel sind allgemein Gemische aus einer sauren Substanz und einem Carbonat bzw. Hydrogencarbonat geeignet. Dabei kommen als saure Substanzen generell feste anorganische und organische Säuren, sowie saure Salze mehrbasischer Säuren in Betracht. Geeignete saure Substanzen sind aliphatische Polycarbonsäuren, wie Zitronensäure, Weinsäure, Oxalsäure, Maleinsäure und Adipinsäure, sowie die sauren Alkalisalze dieser Säuren. Ebenfalls geeignet sind Borsäure, saure Phosphate, wie Natrium-dihydrogenphosphat und saure Sulfate, wie Natrium-hydrogensulfat. Geeignete Carbonate und Hydrogencarbonate sind Alkali- und Erdalkalimetallcarbonate, wie Natrium-, Kalium-, Calcium- und Magnesiumcarbonat, sowie die Hydrogencarbonate dieser Metalle. Bevorzugte Carbonate und Hydrogencarbonate sind Alkalimetallcarbonate und -Hydrogencarbonate, insbesondere Natrium- und Kaliumcarbonat und -Hydrogencarbonat.

Bevorzugte Sprengmittel sind Mischungen von organischen Polycarbonsäuren und Alkalicarbonat. Besonders bevorzugt sind Mischungen von Zitronensäure und Natriumcarbonat oder Natriumhydrogencarbonat.

Als Gleit- und Fliessreguliermittel können allgemein solche Substanzen verwendet werden, die in der durch Vermischen der Komponenten erhaltenen Pulvermischung die Gleitfähigkeit der Partikel gegeneinander erhöhen und so ein gutes Fliessverhalten der Mischung gewährleisten und die ferner gleichzeitig auch die Gleitfähigkeit der gepressten Formkörper erhöhen, damit diese leicht aus der Pressform entnommen werden können. Geeignete Gleit-und Fliessreguliermittel sind Talkum, höhere Fettsäuren, wie Palmitinsäure und Stearinsäure, sowie deren Magnesium-, Calcium-, Kalium-und Aluminiumsalze, C₁₄-C₁₈-Alkanole, wie Myristyl-, Cetyl- und Stearylalkohol, Paraffin, hydrierte Fette und Oele, Stärke, Saccharose, Polyäthylenglykole mit einem Molekulargewicht von 4000-6000, Borsäure, Natriumchlorid und Magnesiumoxid. Bevorzugte Gleit- und Fliessreguliermittel sind Stearinsäure, Magnesiumstearat und Talkum.

Als Füllstoffe und Bindemittel sind inerte organische und anorganische Substanzen geeignet, die einerseits als Verdünnungsmittel und Träger für die Aktivsubstanz dienen können und die andererseits dem gepressten Formkörper eine ausreichende Stabilität verleihen. Als organische Füllstoffe und Bindemittel können beispielsweise Stärke, wie Kartoffel-, Weizen- und Maisstärke, Zucker, wie Lactose, Glucose, Saccharose, Mannit und Sorbit, Cellulose, Polyalkylenglykole mit einem Molekulargewicht von 4000-6000, Natriumchlorid, Natriumsulfat, Calciumsulfat (Gips), Dicalciumphosphatdihydrat, Kieselsäure, Silikate, wie Magnesium- und Aluminiumsilikat, und Tone, wie Bentonit und Montmorillonit. Bevorzugte Füllstoffe und Bindemittel sind Lactose, beispielsweise das unter der Bezeichnung Tablettose im Handel erhältliche Produkt, sowie Dicalciumphosphatdihydrat.

Zur Herstellung der erfindungsgemässen Konzentrate werden die Aktivsubstanz, das Dispergiermittel, das Sprengmittel und Füllstoffe und Bindemittel in einem Pulvermischer bis zur Homogenisierung gemischt. Dann wird der homogenen Mischung noch das Gleit- und Fliessreguliermittel zugemischt. Die so hergestellte Mischung ist unmittelbar zur Herstellung der erfindungsgemässen Formkörper in üblichen Pressvorrichtungen, beispielsweise Tablettierungsvorrichtungen, geeignet.

Die Form der erfindungsgemässen Formkörper kann verschieden sein. Geeignete Formen sind beispielsweise Zylinder, Würfel, Stäbchen, Ei, Kugel, Scheibe oder Linse. Vorzugsweise werden die erfindungsgemässen Formkörper als Scheibe hergestellt. Die Grösse der erfindungsgemässen Formkörper kann in weiten Grenzen variiert werden. Scheibenförmige Formkörper haben in der Regel einen Durchmesser von 3-80 mm.

Vor der Applikation des herbiziden Mittels werden die erfindungsgemässen Formkörper in einer der gewünschten Konzentration entsprechenden Wassermenge durch Umrühren zum Zerfall gebracht. Dabei entsteht eine homogene Dispersion, die unmittelbar mit Hilfe von üblichen Spritzgeräten, beispielsweise Rückenspritzen oder Traktorspritzen, appliziert werden kann.

Die erfindungsgemässen Wirkstoffkonzentrate in Form von gepressten Formkörpern zeichnen sich gegenüber bekannten Konzentraten vor allem durch einfache Handhabung aus. Der Wirkstoff kann mit geringstem Aufwand zuverlässig dosiert werden und die Ueberführung in eine gebrauchsfertige Spritzbrühe ist sehr einfach. Die Belastung von Umwelt- und Bedienungspersonal wird im Vergleich mit anderen festen Formulierungsformen auf ein Minimum reduziert. Ferner wird weniger Packmaterial benötigt. Der Vorteil der erfindungsgemässen Konzentrate gegenüber herkömmlichen flüssigen Konzentraten, wie emulgierbaren Konzentraten und wässrigen Suspensionskonzentraten, besteht darin, dass sie bei Transport und Lagerung weniger Raum beanspruchen. Dabei ist gegenüber emulgierbaren Konzentraten zusätzlich vorteilhaft, dass beim Verdünnen mit Wasser eine lösungsmittelfreie Spritzbrühe entsteht, während gegenüber den wässrigen Suspensionskonzentraten ein zusätzlicher Vorteil darin besteht, dass die erfindungsgemässen Konzentrate auch für hydrolyseempfindliche Substanzen und für Substanzen mit einer Löslichkeit von ≧ 200 ppm geeignet sind.

Brausetabletten, die 40-50 Gew.% an herbizid wirksamem Sulfonylharnstoff enthalten, können nach der folgenden allgemeinen Methode hergestellt werden:
Die Lactose wird in einem Pulvermischer vorgelegt und mit Wasser besprüht, wobei die Wassermenge so bemessen wird, dass die Gesamtmischung nach Zugabe der übrigen Bestandteile 2,5-5 Gew.%, vorzugsweise 3-4 Gew.% Wasser enthält. Die feuchte Lactose wird dann durch ein Sieb mit einer Maschenweite von etwa 2 mm gesiebt. Dann wird der fein gemahlene Sulfonylharnstoff zugegeben und die Mischung homogenisiert. Danach wird das Dispergiermittel, die feste wasserlösliche saure Substanz, das Carbonat und der Binder zugegeben und die Mischung erneut homogenisiert. Schliesslich wird das Gleit- und Fliessreguliermittel zugemischt. Die erhaltene Mischung kann dann unmittelbar in üblichen Tablettiermaschinen verarbeitet werden.

In den nachfolgenden Beispielen wird die Zusammensetzung von einigen typischen erfindungsgemässen Wirkstoffkonzentraten angegeben. Die Beispiele begrenzen die vorliegende Erfindung jedoch in keiner Weise. Die Prozentangaben bedeuten Gew.%.

### Beispiel 1

50 % N-[2-(2-Chloräthoxy)-phenylsulfonyl]-N'-(4-methoxy-6-methyl-1,3,5-triazin-2-yl)-harnstoff
2 % Ligninsulfonat-natrium
9 % Zitronensäure
11.5 % Natriumcarbonat
3 % Stearinsäure Pulver
3 % Wasser
ad 100 % Lactose

### Beispiel 2

10 % N-[2-(2-Methoxyäthoxy)-phenylsulfonyl]-N'-(4,6-bis-methoxy-1,3,5-triazin-2-yl)-harnstoff
2 % Ligninsulfonat-natrium
9 % Zitronensäure
11.5 % Natriumcarbonat
33 % Talk
0.7 % Magnesiumstearat
2.7 % Wasser
ad 100 % Lactose

### Beispiel 3

50 % N-[2-(2-Chloräthoxy)-phenylsulfonyl]-N′-(4-methoxy-6-methyl-1,3,5-triazin-2-yl)-harnstoff
2 % Ligninsulfonat-natrium
9 % Zitronensäure
11.5 % Natriumcarbonat
3 % Magnesiumstearat
10 % Dicalciumphosphatdihydrat
2.5 % Wasser
ad 100 % Lactose

### Beispiel 4

42 % N-[2-(2-Chloräthoxy)-phenylsulfonyl]-N′-(4-methoxy-6-methyl-1,3,5-triazin-2-yl)-harnstoff
2 % Ligninsulfonat-natrium
9 % Zitronensäure
11.5 % Natriumcarbonat
2 % Cetylalkoholpolyglykolether (EO = 2)
2 % Stearinsäure
3.5 % Wasser
ad 100 % Lactose

### Beispiel 5

42 % N-[2-(2-Chloräthoxy)-phenylsulfonyl]-N′-(4-methoxy-6-methyl-1,3,5-triazin-2-yl)-harnstoff
4 % Oelsäure-methyltaurid-natrium
9 % Zitronensäure
11.5 % Natriumcarbonat
3 % Stearinsäure
4 % Wasser
ad 100 % Lactose

### Beispiel 6

42 % N-[2-(2-Chloräthoxy)-phenylsulfonyl]-N′-(4-methoxy-6-methyl-1,3,5-triazin-2-yl)-harnstoff
2 % Ligninsulfonat-natrium
9 % Zitronensäure
11.5 % Natriumcarbonat
2 % Propylenoxid-ethylenoxid-blockcopolymer
2 % Stearinsäure
3 % Wasser
ad 100 % Lactose

### Beispiel 7

40 % N-[2-(2-Chloräthoxy)-phenylsulfonyl]-N′-(4-methoxy-6-methyl-1,3,5-triazin-2-yl)-harnstoff
2 % Ligninsulfonat-natrium
9 % Zitronensäure
11.5 % Natriumcarbonat
2 % Stearinsäure
1 % Maltodextrin
3.5 % Wasser
ad 100 % Lactose

### Beispiel 8

40 % N-(2-Methoxycarbonylphenylsulfonyl)-N′-(4,6-bis-difluormethoxypyrimidin-2-yl)-harnstoff
2 % Ligninsulfonat-natrium
9 % Zitronensäure
11.5 % Natriumcarbonat
2 % Stearinsäure
1 % Maltodextrin
3.5 % Wasser
ad 100 % Lactose

### Beispiel 9

40 % N-(2-Methoxycarbonylphenylsulfonyl)-N′-(4,6-bis-difluormethoxypyrimidin-2-yl)-harnstoff
2 % Ligninsulfonat-natrium
9 % Zitronensäure
11.5 % Natriumcarbonat
2 % Stearinsäure
1 % Maltodextrin
2.6 % Wasser
ad 100 % Lactose

## Patentansprüche

1. Herbizides Wirkstoffkonzentrat in Form von gepressten Formkörpern, die in Wasser unter Bildung einer spritzfähigen Dispersion zerfallen, gekennzeichnet durch einen Gehalt von
5-75 Gew.% Sulfonylharnstoff mit herbizider Wirkung
1-10 Gew.% Dispergiermittel
5-25 Gew.% Sprengmittel bestehend aus einer festen wasserlöslichen sauren Substanz und einem Alkalimetall- oder Erdalkalimetallcarbonat oder -hydrogencarbonat
1-35 Gew.% Gleit- und Fliessreguliermittel
ad 100 Gew.% feuchte Lactose mit einem Wassergehalt von 8-12 Gew.% und gegebenenfalls Füllstoff und Bindemittel.

2. Herbizides Wirkstoffkonzentrat nach Anspruch 1, dadurch gekennzeichnet, dass der Gehalt an herbizid wirksamem Sulfonylharnstoff 40-50 Gew.% beträgt.

3. Herbizides Wirkstoffkonzentrat nach Anspruch 2, gekennzeichnet durch einen Gehalt von
40-50 Gew.% Sulfonylharnstoff mit herbizider Wirkung,
1,5-2,5 Gew.% Dispergiermittel
8-12 Gew.% einer festen wasserlöslichen sauren Substanz,
10-15 Gew.% Alkalimetall- oder Erdalkalimetallcarbonat oder -hydrogencarbonat
1,5-3 Gew.% eines Gleit- und Fliessreguliermittels
0,5-3 Gew.% Bindemittel
2,5-5 Gew.% Wasser
ad 100 Gew.% Lactose.

4. Herbizides Wirkstoffkonzentrat nach Anspruch 3, dadurch gekennzeichnet, dass es einen herbizid wirksamen Sulfonylharnstoff der Formel 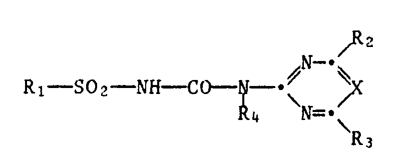 in welcher
R₁ 2-Chlorphenyl, 2-Methoxycarbonylphenyl, 2-Aethoxycarbonylphenyl, 2-(2-Methoxyäthoxy)-phenyl, 2-(2-Chloräthoxy)-phenyl, 2-Propargyloxyphenyl, 2-Methoxycarbonylthien-3-yl, 4-Aethoxycarbonyl-1-methylpyrazol-5-yl oder 2-Methoxycarbonylbenzyl,
R₂ Methyl, Methoxy, Difluormethoxy oder Cyclopropyl,
R₃ Methyl, Methoxy, Aethoxy, Difluormethoxy oder Chlor,
R₄ Wasserstoff oder Methyl und
X ein Stickstoffatom oder eine Methingruppe bedeutet.

5. Herbizides Wirkstoffkonzentrat nach Anspruch 4, dadurch gekennzeichnet, dass es einen herbizid wirksamen Sulfonylharnstoff aus der Gruppe
N-(2-Chlorphenylsulfonyl)-N′-(4-methoxy-6-methyl-1,3,5-triazin-2-yl)-harnstoff;
N-(2-Methoxycarbonylphenylsulfonyl)-N′-(4,6-bis-difluormethoxy-1,3,5-triazin-2-yl)-harnstoff;
N-(2-Methoxycarbonylphenylsulfonyl)-N′-(4,6-dimethylpyrimid-2-yl)-harnstoff;
N-[2-(2-Methoxyäthoxy)-phenylsulfonyl]-N′-(4,6-bis-methoxy-1,3,5-triazin-2-yl)-harnstoff;
N-[2-(2-Chloräthoxy)-phenylsulfonyl]-N′-(4-methoxy-6-methyl-1,3,5-triazin-2-yl)-harnstoff;
N-(2-Propargyloxyphenylsulfonyl)-N′-(4-äthoxy-6-methyl-1,3,5-triazin-2-yl)-harnstoff;
N-(2-Methoxycarbonylphenylsulfonyl)-N′-(4-äthoxy-6-cyclopropylpyrimidin-2-yl)-harnstoff;
N-(2-Methoxycarbonylthien-3-ylsulfonyl)-N′-(4-methoxy-6-methyl-1,3,5-triazin-2-yl)-harnstoff;
N-(2-Methoxycarbonylbenzylsulfonyl)-N′-(4,6-bis-methoxypyrimidin-2-yl)-harnstoff,
N-(2-Aethoxycarbonylphenylsulfonyl)-N′-(4-chlor-6-methoxypyrimidin-2-yl)-harnstoff,
N-(2-Methoxycarbonylphenylsulfonyl)-N′-methyl-N′-(4-methoxy-6methyl-1,3,5-triazin-2-yl)-harnstoff,
N-(2-Methoxycarbonylphenylsulfonyl)-N′(4,6-bis-difluormethoxypyrimidin-2-yl)-harnstoff und
N-(2-Methoxycarbonylphenylsulfonyl)-N′-(4-methoxy-6-methyl-1,3,5-triazin-2-yl)-harnstoff.

6. Herbizides Wirkstoffkonzentrat nach Anspruch 3, dadurch gekennzeichnet, dass es als Dispergiermittel eine anionische und/oder nichtionische oberflächenaktive Substanz enthält.

7. Herbizides Wirkstoffkonzentrat nach Anspruch 6, dadurch gekennzeichnet, dass es als Dispergiermittel Ligninsulfonat-natrium, Natriumlaurylsulfat oder Oelsäuremethyltaurid-natrium enthält.

8. Herbizides Wirkstoffkonzentrat nach Anspruch 3, dadurch gekennzeichnet, dass es als feste saure Substanz eine anorganische oder organische Säure oder ein saures Salz einer mehrbasischen Säure enthält.

9. Herbizides Wirkstoffkonzentrat nach Anspruch 8, dadurch gekennzeichnet, dass es als feste saure Substanz Zitronensäure, Weinsäure, Oxalsäure, Maleinsäure oder Adipinsäure oder ein saures Salz einer dieser Säuren enthält.

10. Herbizides Wirkstoffkonzentrat nach Anspruch 9, dadurch gekennzeichnet, dass es als saure Substanz Zitronensäure enthält.

11. Herbizides Wirkstoffkonzentrat nach Anspruch 3, dadurch gekennzeichnet, dass es Natrium- oder Kaliumcarbonat oder Natrium- oder Kaliumhydrogencarbonat enthält.

12. Herbizides Wirkstoffkonzentrat nach Anspruch 3, dadurch gekennzeichnet, dass es als Gleit- und Fliessreguliermittel Talkum, eine höhere Fettsäure, das Magnesium-, Kalcium-, Kalium- oder Aluminiumsalz einer höheren Fettsäure, ein C₁₄-C₁₈-Alkanol, Parafin, ein hydriertes Fett oder ein hydriertes Oel, Stärke, Saccharose, ein Polyethylenglykol mit einem Molekulargewicht von 4000-6000, Borsäure, Natriumchlorid oder Magnesiumoxid enthält.

13. Herbizides Wirkstoffkonzentrat nach Anspruch 12, dadurch gekennzeichnet, dass es als Gleit- und Fliessreguliermittel Palmitinsäure oder Stearinsäure oder ein Magnesium-, Kalcium-, Kalium- oder Aluminiumsalz einer dieser Säuren, Myristylalkohol, Cetylalkohol oder Stearylalkohol enthält.

14. Herbizides Wirkstoffkonzentrat nach Anspruch 13, dadurch gekennzeichnet, dass es als Gleit- und Fliessreguliermittel Stearinsäure, Magnesiumstearat oder Talkum enthält.

15. Herbizides Wirkstoffkonzentrat nach Anspruch 3, dadurch gekennzeichnet, dass es Dextrin als Binder enthält.

16. Herbizides Wirkstoffkonzentrat nach Anspruch 3, dadurch gekennzeichnet, dass es Maltodextrin als Binder enthält.

17. Herbizides Wirkstoffkonzentrat nach Anspruch 3, in Form von Brausetabletten mit einem Durchmesser von 60-80 mm und einem Gewicht von 40-60 g.

18. Verfahren zur Herstellung von Brausetabletten, die
40-50 Gew.% eines herbizid wirksamen Sulfonylharnstoffs,
1,5-2,5 Gew.% Dispergiermittel
8-12 Gew.% einer festen wasserlöslichen sauren Substanz
10-15 Gew.% eines Alkali- oder Erdalkalimetallcarbonats oder-Hydrogencarbonats
1,5-3 Gew.% eines Gleit- und Fliessreguliermittels
0,5-3 Gew.% eines Bindemittels
2,5-5 Gew.% Wasser
ad 100 Gew.% Lactose
enthalten, dadurch gekennzeichnet, dass man zunächst den Wassergehalt der Lactose auf 8-12 Gew.% einstellt, die feuchte Lactose siebt, anschliessend den herbizid wirksamen Sulfonylharnstoff zumischt und die erhaltene Mischung homogenisiert, der homogenisierten Mischung das Dispergiermittel, die feste wasserlösliche saure Substanz, das Carbonat und den Binder zumischt und die Mischung erneut homogenisiert, dann das Gleit-und Fliessreguliermittel zugibt und die erhaltene Mischung tablettiert.

19. Verfahren nach Anspruch 18, dadurch gekennzeichnet, dass man die zur Herstellung der zu tablettierenden Mischung benötigten Materialien vor dem Vermischen auf eine Teilchengrösse von weniger als 15 µm malt.

## Claims

1. A herbicidal compound concentrate in the form of compressed solid formulations that disintegrate in water to form a sprayable dispersion, which comprises
from 5 to 75 % by weight of a herbicidally active sulfonyl urea
from 1 to 10 % by weight of a dispersion agent
from 5 to 25 % by weight of a disintegrator comprising a solid water-soluble acidic substance and an alkali metal or alkaline earth metal carbonate or hydrogen carbonate
from 1 to 35 % by weight of a gliding and flow-regulating agent
ad 100 % by weight of moist lactose having a water content of from 8 to 12 % by weight and, where appropriate, filler and binder.

2. A herbicidal compound concentrate according to claim 1, wherein the content of herbicidally active sulfonyl urea is from 40 to 50 % by weight.

3. A herbicidal compound concentrate according to claim 2, which comprises
from 40 to 50 % by weight of a herbicidally active sulfonyl urea
from 1.5 to 2.5 % by weight of a dispersion agent from 8 to 12 % by weight of a solid water-soluble acidic substance
from 10 to 15 % by weight of an alkali metal or alkaline earth metal carbonate or hydrogen carbonate
from 1.5 to 3 % by weight of a gliding and flow-regulating agent
from 0.5 to 3 % by weight of a binder
from 2.5 to 5 % by weight of water and
ad 100 % by weight of lactose.

4. A herbicidal compound concentrate according to claim 3, which comprises a herbicidally active sulfonyl urea of the formula 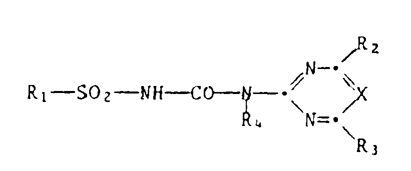 in which
R₁ represents 2-chlorophenyl, 2-methoxycarbonylphenyl, 2-ethoxycarbonylphenyl, 2-(2-methoxyethoxy)-phenyl, 2-(2-chloroethoxy)-phenyl, 2-propargyloxyphenyl, 2-methoxycarbonylthien-3-yl, 4-ethoxycarbonyl-1-methylpyrazol-5-yl or 2-methoxycarbonylbenzyl,
R₂ represents methyl, methoxy, difluoromethoxy or cyclopropyl,
R₃ represents methyl, methoxy, ethoxy, difluoromethoxy or chlorine,
R₄ represents hydrogen or methyl and
X represents a nitrogen atom or a methine group.

5. A herbicidal compound concentrate according to claim 4, which comprises a herbicidally active sulfonyl urea selected from the group:
N-(2-chlorophenylsulfonyl)-N'-(4-methoxy-6-methyl-1,3,5-triazin-2-yl)-urea;
N-(2-methoxycarbonylphenylsulfonyl)-N'-(4,6-bis-difluoromethoxy-1,3,5-triazin-2-yl)-urea;
N-(2-methoxycarbonylphenylsulfonyl)-N'-(4,6-dimethylpyrimidin-2-yl)-urea;
N-[2-(2-methoxyethoxy)-phenylsulfonyl]-N'-(4,6-bis-methoxy-1,3,5-triazin-2-yl)-urea;
N-[2-(2-chloroethoxy)-phenylsulfonyl]-N'-(4-methoxy-6-methyl-1,3,5-triazin-2-yl)-urea;
N-(2-propargyloxyphenylsulfonyl)-N'-(4-ethoxy-6-methyl-1,3,5-triazin-2-yl)-urea;
N-(2-methoxycarbonylphenylsulfonyl)-N'-(4-ethoxy-6-cyclopropylpyrimidin-2-yl)-urea;
N-(2-methoxycarbonylthien-3-ylsulfonyl)-N'-(4-methoxy-6-methyl-1,3,5-triazin-2-yl)-urea;
N-(2-methoxycarbonylbenzylsulfonyl)-N'-(4,6-bis-methoxypyrimidin-2-yl)-urea;
N-(2-ethoxycarbonylphenylsulfonyl)-N'-(4-chloro-6-methoxypyrimidin-2-yl)-urea;
N-(2-methoxycarbonylphenylsulfonyl)-N'-methyl-N'-(4-methoxy-6-methyl-1,3,5-triazin-2-yl)-urea;
N-(2-methoxycarbonylphenylsulfonyl)-N'-(4,6-bis-difluoromethoxypyrimidin-2-yl)-urea; and
N-(2-methoxycarbonylphenylsulfonyl)-N'-(4-methoxy-6-methyl-1,3,5-triazin-2-yl)-urea.

6. A herbicidal compound concentrate according to claim 3, which comprises as dispersion agent an anionic and/or non-ionic surfactant.

7. A herbicidal compound concentrate according to claim 6, which comprises as dispersion agent sodium lignosulfonate, sodium lauryl sulfate or sodium oleic acid methyl tauride.

8. A herbicidal compound concentrate according to claim 3, which comprises as solid acidic substance an inorganic or organic acid or an acidic salt of a polybasic acid.

9. A herbicidal compound concentrate according to claim 8, which comprises as solid acidic substance citric acid, tartaric acid, oxalic acid, maleic acid or adipic acid or an acidic salt of one of those acids.

10. A herbicidal compound concentrate according to claim 9, which comprises as acidic substance citric acid.

11. A herbicidal compound concentrate according to claim 3, which comprises sodium or potassium carbonate or hydrogen carbonate.

12. A herbicidal compound concentrate according to claim 3, which comprises as gliding and flow-regulating agent talcum, a higher fatty acid or the magnesium, calcium, potassium or aluminium salt thereof, a C₁₄-C₁₈-alkanol, paraffin, a hydrogenated fat or a hydrogenated oil, starch, saccharose, a polyethylene glycol having a molecular weight of from 4000 to 6000, boric acid, sodium chloride or magnesium oxide.

13. A herbicidal compound concentrate according to claim 12, which comprises as gliding and flow-regulating agent palmitic acid or stearic acid, or a magnesium, calcium, potassium or aluminium salt of one of those acids, myristyl alcohol, cetyl alcohol or stearyl alcohol.

14. A herbicidal compound concentrate according to claim 13, which comprises as gliding and flow-regulating agent stearic acid, magnesium stearate or talcum.

15. A herbicidal compound concentrate according to claim 3, which comprises dextrin as binder.

16. A herbicidal compound concentrate according to claim 3, which comprises malto-dextrin as binder.

17. A herbicidal compound concentrate according to claim 3 in the form of effervescent tablets having a diameter of 60-80 mm and a weight of 40-60 g.

18. A process for the preparation of effervescent tablets comprising
from 40 to 50 % by weight of a herbicidally active sulfonyl urea
from 1.5 to 2.5 % by weight of a dispersion agent
from 8 to 12 % by weight of a solid water-soluble acidic substance
from 10 to 15 % by weight of an alkali metal or alkaline earth metal carbonate or hydrogen carbonate
from 1.5 to 3 % by weight of a gliding and flow-regulating agent
from 0.5 to 3 % by weight of a binder
from 2.5 to 5 % by weight of water and
ad 100 % by weight of lactose,
which process comprises first adjusting the water content of the lactose to 8-12 % by weight, conveying the moist lactose through a sieve, then admixing the herbicidally active sulfonyl urea and homogenising the mixture obtained, admixing the dispersion agent, the solid, water-soluble acidic substance, the carbonate and the binder and again homogenising the mixture, then adding the gliding and flow-regulating agent and forming tablets from the mixture obtained.

19. A process according to claim 18, wherein the materials required for the preparation of the mixture from which tablets are to be formed are ground before mixing to a particle size of less than 15 µm.

## Revendications

1. Concentré de substance active herbicide à l'état de corps moulés par compression se désagrégeant dans l'eau avec formation d'une dispersion pulvérisable, caractérisé en ce qu'il contient
5 à 75% en poids d'une sulfonylurée possédant l'activité herbicide,
1 à 10% en poids d'agents dispersants,
5 à 25% en poids d'agents désagrégeants consistant en une substance acide soluble dans l'eau et un carbonate ou bicarbonate de métal alcalin ou alcalino-terreux,
1 à 35% en poids d'agents lubrifiants et régulateurs d'écoulement,
complément à 100% en poids : lactose humide à une teneur en humidité de 8 à 12% en poids et le cas échéant matières de charge et liants.

2. Concentré de substance active herbicide selon revendication 1, caractérisé en ce que la teneur en la sulfonylurée possédant l'activité herbicide est de 40 à 50% en poids.

3. Concentré de substance active herbicide selon revendication 2, caractérisé en ce qu'il contient
40 à 50 % en poids d'une sulfonylurée possédant l'activité herbicide,
1,5 à 2,5 % en poids d'agents dispersants,
8 à 12 % en poids d'une substance acide solide, soluble dans l'eau,
10 à 15 % en poids d'un carbonate ou bicarbonate de métal alcalin ou alcalino-terreux,
1,5 à 3 % en poids d'un agent lubrifiant et régulateur d'écoulement,
0,5 à 3 % en poids de liant,
2,5 à 5 % en poids d'eau,
complément à 100% en poids : lactose.

4. Concentré de substance active herbicide selon revendication 3, caractérisé en ce qu'il contient une sulfonylurée possédant l'activité herbicide et qui répond à la formule 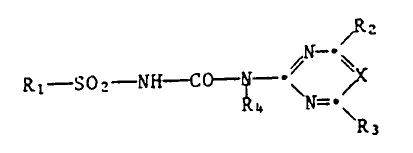 dans laquelle
R₁ représente un groupe 2-chlorophényle, 2-méthoxycarbonylphényle, 2-éthoxycarbonylphényle, 2-(2-méthoxyéthoxy)-phényle, 2-(2-chloréthoxy)-phényle, 2-propargyloxyphényle, 2-méthoxycarbonylthiène-3-yle, 4-éthoxycarbonyl-1-méthylpyrazole-5-yle ou 2-méthoxycarbonylbenzyle,
R₂ représente un groupe méthyle, méthoxy, difluorométhoxy ou cyclopropyle,
R₃ représente un groupe méthyle, méthoxy, éthoxy, difluorométhoxy ou le chlore,
R₄ représente l'hydrogène ou un groupe méthyle et X représente un atome d'azote ou le groupe méthine.

5. Concentré de substance active herbicide selon revendication 4, caractérisé en ce qu'il contient une sulfonylurée possédant l'activité herbicide choisie dans le groupe suivant :
N-(2-chlorophénylsulfonyl)-N'-(4-méthoxy-6-méthyl-1,3,5-triazine-2-yl)-urée ;
N-(2-méthoxycarbonylphénylsulfonyl)-N'-(4,6-bis-difluorométhoxy-1,3,5-triazine-2-yl)-urée ;
N-(2-méthoxycarbonylphénylsulfonyl)-N'-(4,6-diméthylpyrimid-2-yl)-urée ;
N-[2-(2-méthoxyéthoxy)-phénylsulfonyl]-N'-(4,6-bis-méthoxy-1,3,5-triazine-2-yl)-urée ;
N-[2-(2-chloréthoxy)-phénylsulfonyl]-N'-(4-méthoxy-6-méthyl-1,3,5-triazine-2-yl)-urée ;
N-(2-propargyloxyphénylsulfonyl)-N'-(4-éthoxy-6-méthyl-1,3,5-triazine-2-yl)-urée ;
N-(2-méthoxycarbonylphénylsulfonyl)-N'-(4-éthoxy-6-cyclopropylpyrimidine-2-yl)-urée ;
N-(2-méthoxycarbonylthiène-3-ylsulfonyl)-N'-(4-méthoxy-6-méthyl-1,3,5-triazine-2-yl)-urée ;
N-(2-méthoxycarbonylbenzylsulfonyl)-N'-(4,6-bis-méthoxypyrimidine-2-yl)-urée ;
N-(2-éthoxycarbonylphénylsulfonyl)-N'-(4-chloro-6-méthoxypyrimidine-2-yl)-urée ;
N-(2-méthoxycarbonylphénylsulfonyl)-N'-méthyl-N'-(4-méthoxy-6-méthyl-1,3,5-triazine-2-yl)-urée ;
N-(2-méthoxycarbonylphénylsulfonyl)-N'-(4,6-bis-difluorométhoxypyrimidine-2-yl)-urée et
N-(2-méthoxycarbonylphénylsulfonyl)-N'-(4-méthoxy-6-méthyl-1,3,5-triazine-2-yl)-urée.

6. Concentré de substance active herbicide selon revendication 3, caractérisé en ce qu'il contient en tant qu'agent dispersant un agent tensio-actif anionique et/ou non-ionique.

7. Concentré de substance active herbicide selon revendication 6, caractérisé en ce qu'il contient en tant qu'agent dispersant du ligninesulfonate de sodium, du laurylsulfate de sodium ou le sel de sodium du méthyltauride de l'acide oléique.

8. Concentré de substance active herbicide selon revendication 3, caractérisé en ce qu'il contient en tant que substance acide solide un acide minéral ou organique ou un sel acide d'un acide polybasique.

9. Concentré de substance active herbicide selon revendication 8, caractérisé en ce qu'il contient en tant que substance acide solide l'acide citrique, l'acide tartrique, l'acide oxalique, l'acide maléique ou l'acide adipique ou un sel acide de l'un de ces acides.

10. Concentré de substance active herbicide selon revendication 9, caractérisé en ce qu'il contient en tant que substance acide l'acide citrique.

11. Concentré de substance active herbicide selon revendication 3, caractérisé en ce qu'il contient du carbonate de sodium ou de potassium ou du bicarbonate de sodium ou de potassium.

12. Concentré de substance active herbicide selon revendication 3, caractérisé en ce qu'il contient en tant qu'agent lubrifiant et régulateur d'écoulement du talc, un acide gras supérieur, le sel de magnésium, de calcium, de potassium ou d'aluminium d'un acide gras supérieur, un alcanol en C14-C18, de la paraffine, une graisse hydrogénée ou une huile hydrogénée, de l'amidon, du saccharose, un polyéthylène-glycol de poids moléculaire 4 000 à 6 000, de l'acide borique, du chlorure de sodium ou de la magnésie.

13. Concentré de substance active herbicide selon revendication 12, caractérisé en ce qu'il contient en tant qu'agent lubrifiant et régulateur d'écoulement de l'acide palmitique ou de l'acide stéarique ou un sel de magnésium, de calcium, de potassium ou d'aluminium de l'un de ces acides, de l'alcool myristylique, de l'alcool cétylique ou de l'alcool stéarylique.

14. Concentré de substance active herbicide selon revendication 13, caractérisé en ce qu'il contient en tant qu'agent lubrifiant et régulateur d'écoulement de l'acide stéarique, du stéarate de magnésium ou du talc.

15. Concentré de substance active herbicide selon revendication 3, caractérisé en ce qu'il contient en tant que liant de la dextrine.

16. Concentré de substance active herbicide selon revendication 3, caractérisé en ce qu'il contient en tant que liant de la maltodextrine.

17. Concentré de substance active herbicide selon revendication 3, à l'état de comprimés effervescents ayant un diamètre de 60 à 80 mm et un poids de 40 à 60 g.

18. Procédé de préparation de comprimés effervescents contenant
40 à 50 % en poids d'une sulfonylurée possédant l'activité herbicide,
1,5 à 2,5% en poids d'agents dispersants,
8 à 12 % en poids d'une substance acide solide soluble dans l'eau,
10 à 15 % en poids d'un carbonate ou bicarbonate de métal alcalin ou alcalino-terreux,
1,5 à 3 % en poids d'un agent lubrifiant et régulateur d'écoulement,
0,5 à 3 % en poids d'un liant,
2,5 à 5 % en poids d'eau,
complément à 100% en poids : lactose,
caractérisé en ce que l'on règle d'abord la teneur en humidité du lactose à un niveau de 8 à 12% en poids, on tamise le lactose humide, on mélange ensuite la sulfonylurée possédant l'activité herbicide et on homogénéise le mélange, on ajoute au mélange homogénéisé l'agent dispersant, la substance acide solide, soluble dans l'eau, le carbonate et le liant, on mélange et on homogénéise à nouveau le mélange puis on ajoute l'agent lubrifiant et régulateur d'écoulement et on met le mélange à l'état de comprimés.

19. procédé selon revendication 18, caractérisé en ce que, avant le mélange, on broie les matières nécessaires à la préparation du mélange à mettre à l'état de comprimés jusqu'à une dimension de particule inférieure à 15 µm.
